# EUROPEAN PATENT APPLICATION

(11) **EP 4 585 835 A1**
(43) Date of publication of application: **16.07.2025**
(21) Application number: 23914486.8
(22) Date of filing: 14.12.2023
(51) Int. Cl.: F16K 15/04, F16K 47/08

(54) **PRESSURE CONTROL VALVE CAPABLE OF REPLACEMENT**

(30) Priority: 21.08.2023 CN 202311062043
(71) Applicant: China Nuclear Power Engineering Co., Ltd., Shenzhen, Guangdong 518124 (CN)
(72) Inventor: ZHANG, Yixun, Shenzhen, Guangdong 518124 (CN); YIN, Jin, Shenzhen, Guangdong 518124 (CN); CONG, Guohui, Shenzhen, Guangdong 518124 (CN); XIA, Yuanhong, Shenzhen, Guangdong 518124 (CN); WANG, Xueling, Shenzhen, Guangdong 518124 (CN); CHEN, Xingjiang, Shenzhen, Guangdong 518124 (CN)
(74) Representative: Westphal, Mussgnug & Partner, Patentanwälte mbB
(86) International application number: PCT/CN2023/138953
(87) International publication number: WO 2024/146352

(57) **Abstract**

Disclosed in the present invention is a pressure control valve capable of replacement, the pressure control valve comprising a shell, and a throttle valve and a check valve which are mounted in the shell, wherein the shell comprises a first shell portion and a second shell portion detachably connected to a lower end of the first shell portion: the first shell portion is internally provided with a first accommodating cavity penetrating two opposite end surfaces of the first shell portion, the second shell portion is internally provided with a second accommodating cavity penetrating two opposite end surfaces of the second shell portion, and the first accommodating cavity and the second accommodating cavity are connected and in communication with each other: and the throttle valve is limited in the first accommodating cavity, and the check valve is limited in the second accommodating cavity. The pressure control valve of the present invention is used in a nuclear main pump, the separated arrangement of the shell realizes assembly and disassembly and facilitates the replacement of the throttle valve and the check valve inside: and the throttle valve and the check valve can be miniaturized and thus require a small mounting space.

## Description

### FIELD

The invention relates to the technical field of valves, particularly to a replaceable pressure control valve.

### BACKGROUND

The reactor coolant pump (hereinafter referred to as "main pump") is the key equipment of the primary circuit system of the nuclear power plant. Shaft end sealing is the most important equipment that affects the reliability of the reactor coolant pump, and its reliability directly affects the operability of the main pump and nuclear power plant. The shaft end sealing of the main pump adopts a high-pressure and large-diameter hydrostatic seal, which is an integral part of the primary pressure boundary of the nuclear power plant reactor. Among them, the high-pressure large-diameter hydrostatic shaft seal is composed of No. 1, No.2, and No.3 seals connected in series. To control the flow of the injection pipeline of the No.3 seal, a pressure control valve is installed, which is mainly composed of a housing, a throttle valve, and a check valve. The throttle valve is used to control the flow of the injection pipeline into the No.3 seal, and the check valve is used to prevent the radioactive medium from flowing back to the injection pipeline due to the increase of the back pressure of the No.2 seal when the No.1 seal fails and the No.2 seal bears the full pressure of the system.

In the existing pressure control valve, the housing is usually formed into an integrated structure by metal deformation and tight fit, and it can only be disassembled with special tools. The internal throttle valve and check valve are tightly fitted into the housing and are not easy to replace. Moreover, the disassembled and reassembled housing will have some metal scratches, cracks, and other damages, which will easily cause leakage problems in use, and it is difficult to ensure the effect of controlling the flow of the injection pipeline into the No.3 seal, which will further affect the sealing performance of the shaft end of the main pump.

### SUMMARY

The technical problem to be solved by the invention is to provide a replaceable pressure control valve.

The technical scheme adopted by the invention to solve the technical problems is as follows: a replaceable pressure control valve is provided, comprising a housing, a throttle valve, and a check valve, the throttle valve and the check valve are both installed in the housing; the housing comprises a first housing part and a second housing part detachably connected to the lower end of the first housing part; the first housing part is internally provided with a first accommodating cavity penetrating through two opposite end faces of the first housing part, and the second housing part is internally provided with a second accommodating cavity penetrating through two opposite end faces of the second housing part, and the first accommodating cavity is communicated with the second accommodating cavity;
The throttle valve is limited in the first accommodating cavity and is in clearance fit with the inner wall surface of the first accommodating cavity, and the check valve is limited in the second accommodating cavity and is in clearance fit with the inner wall surface of the second accommodating cavity; the throttle valve comprises a first valve housing with two opposite ends open, a flow channel plate group arranged in the first valve housing, and a filter plate arranged in the first valve housing and located on at least one side of the flow channel plate group; the flow channel plate group is provided with a fluid passage through which the medium forms a spiral flow; the flow channel plate group comprises at least one flow channel plate, and the flow channel plate is provided with a central flow channel hole; each of the flow channel plates comprises a first surface and a second surface which are opposite to each other, and a plurality of through holes which penetrate through the first surface and the second surface; the first surface is provided with a plurality of first grooves distributed at intervals, and each first groove surrounds and communicates with at least two through holes to form a first flow channel; the second surface is provided with a plurality of second grooves distributed at intervals, and each second groove surrounds and communicates with at least two through holes to form a second flow channel; the central flow channel hole is formed in the first flow channel and the second flow channel in communication; at least one of the first flow channels and at least one of the second flow channels are communicated through the same through hole.

Preferably, the lower end face of the first housing part is provided with a limiting groove which is communicated with the first accommodating cavity;
The upper end of the second housing part is matched with the limiting groove and connected with the lower end of the first housing part through fasteners.

Preferably, the pressure control valve further comprises a housing sealing ring;
The housing sealing ring is assembled between the bottom surface of the limiting groove and the upper end face of the second housing part.

Preferably, the flow channel plate group comprises two superimposed flow channel plates and an intermediate plate stacked between the two flow channel plates; the flow channel plate is provided with a central flow channel hole, and the intermediate plate is provided with a central through hole which is relatively communicated with the central flow channel hole on the flow channel plate.

Preferably, the first groove on the first surface and the second groove on the second surface are asymmetrical.

Preferably, the first groove is 8-shaped, B-shaped or S-shaped, and surrounds and communicates with two through holes on the first surface; the second groove is 8-shaped, B-shaped or S-shaped, and the second surface is surrounded and communicated with the two through holes.

Preferably, the throttle valve further comprises two positioning plates arranged in the first valve housing at opposite intervals; the flow channel plate group is arranged between the two positioning plates; each positioning plate is provided with a central hole, and the central hole is relatively communicated with the fluid passage of the flow channel plate group.

Preferably, the check valve comprises a second valve housing with two opposite ends open, a sealing ball, a compression spring and a compression nail;
The sealing ball is arranged in the second valve housing and can be separated and sealed at a port of the second valve housing; the compression spring is arranged in the second valve housing through a pressure seat and is telescopically supported below the sealing ball; the compression nail is arranged in another port of the second valve housing and supported below the pressure seat.

Preferably, the compression spring is a small wire diameter spring; the wire diameter of the small wire diameter spring is 0.1 mm to 0.2 mm.

Preferably, the first accommodating cavity comprises a first main cavity and a first passage hole which are communicated with each other;
The first main cavity is located at the upper end of the first housing part and extends through the upper end face of the first housing part, and the throttle valve is arranged in the first main cavity; the inner diameter of the first passage hole is smaller than the inner diameter of the first main cavity, the first passage hole is located at the lower end of the first housing part and extends through the lower end face of the first housing part.

Preferably, the second accommodating cavity comprises a second main cavity and a second passage hole which are communicated with each other;
The second main cavity is located at the upper end of the second housing part and extends through the upper end face of the second housing part, and the check valve is arranged in the second main cavity; the inner diameter of the second passage hole is smaller than the inner diameter of the second main cavity, the second passage hole is located at the lower end of the second housing part and extends through the lower end face of the second housing part.

Preferably, the outer diameter of the throttle valve is 17 mm to 30 mm; the aperture of the filter plate is 0.5 mm to 0.8 mm; the outer diameter of the check valve is 6.5 mm to 7.5 mm;
The outer diameter of the pressure control valve is 85 mm to 95 mm.

Preferably, the pressure control valve further comprises a retaining ring, a first sealing ring and a second sealing ring;
The retaining ring is arranged above the throttle valve and clamped in the first accommodating cavity; the first sealing ring is arrange between the outer periphery of the throttle valve and the inner wall of the first accommodating cavity;
The second sealing ring is arrange between the outer periphery of the check valve and the inner wall of the second accommodating cavity.

The invention has the advantages that: when used for a nuclear main pump, the split arrangement of the housing realizes the clamping and dismounting, which is convenient for the replacement of the internal throttle valve and the check valve; the volume of the throttle valve and check valve can be miniaturized, and the required installation space is small; spiral swirl can be formed in the throttle valve through the arrangement of the flow channel plate group and the communication between the grooves and the through holes of the flow channel plate group, to achieve the purpose of controlling the flow.

### BRIEF DESCRIPTION OF THE DRAWINGS

The invention will be further described concerning the attached drawings and embodiments, in which:
Figure 1 is a schematic sectional view of a replaceable pressure control valve according to an embodiment of the present invention;
Figure 2 is a schematic sectional view of the housing in Figure 1;
Figure 3 is a schematic sectional view of the throttle valve in Figure 1;
Figure 4 is a schematic view of the first surface of the flow channel plate of the throttle valve in Figure 3;
Figure 5 is a schematic view of the second surface of the flow channel plate of the throttle valve in Figure 3;
Figure 6 is a schematic sectional view of the flow channel plate of the throttle valve in the axial direction in Figure 3;
Figure 7 is a streamlined diagram of the medium passing through the throttle valve; and
Figure 8 is a schematic sectional view of the check valve in Figure 1.

### DETAILED DESCRIPTION

To have a clearer understanding of the technical features, purposes, and effects of the present invention, specific embodiments of the present invention will now be described in detail with reference to the attached drawings.

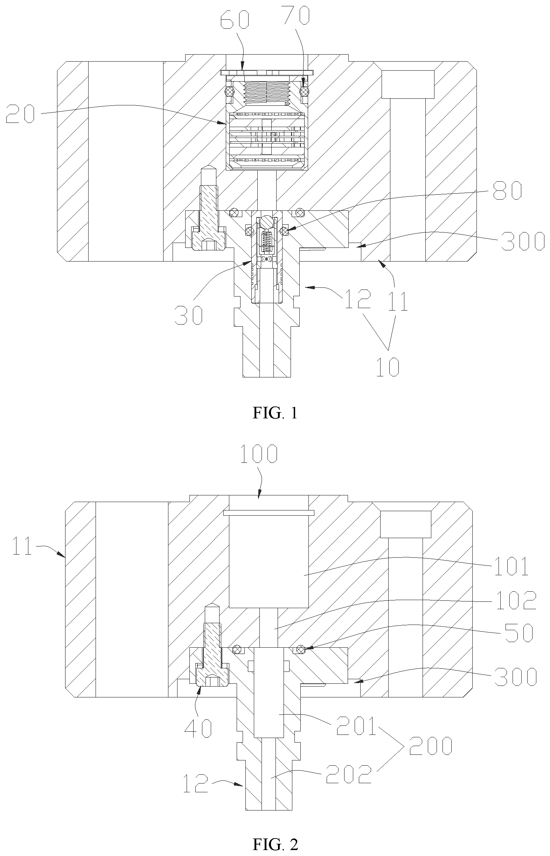

As shown in Figures 1 and 2, a replaceable pressure control valve according to an embodiment of the present invention is used for a nuclear main pump, which may include a housing 10, a throttle valve 20, and a check valve 30, the throttle valve 20 and the check valve 30 are installed in the housing.

Among them, according to the flow direction of the medium (fluid medium), the throttle valve 20 is located at the inlet end of the housing 10 in the housing 10 for controlling the flow rate of the medium. The check valve 30 is located at the outlet end of the housing 10 in the housing 10 to prevent the medium from flowing back.

In the present invention, the housing 10 is separately arranged, so that it can be detachable and the throttle valve 20 and the check valve 30 can be replaced. The housing 10 includes a first housing part 11 and a second housing part 12 detachably connected to the lower end of the first housing part 11. The first housing part 11 is provided with a first accommodating cavity 100 penetrating through two opposite end faces of the first housing part 11. The second housing part 12 is provided with a second accommodating cavity 200 penetrating through two opposite end faces of the second housing part 12, and the first accommodating cavity 100 and the second accommodating cavity 200 are communicated with each other to form an internal channel of the housing 10. The inlet end of the housing 10 is mainly located on the first housing part 11, and the outlet end of the housing 10 is mainly located on the second housing part 12. The throttle valve 20 is limited in the first accommodating cavity 100 and is in clearance fit with the inner wall surface of the first accommodating cavity 100 to receive the medium entering the first housing part 11 and control the flow rate of the medium through. The check valve 30 is limited in the second accommodating cavity 200 and is in clearance fit with the inner wall surface of the second accommodating cavity 200, receives the medium passing through the first housing part 11 and entering the second housing part 12, only allows the medium to pass through and be discharged from the outlet end, and prevents the medium from flowing back to the first housing part 11.

Specifically, for better alignment and connection between the first housing part 11 and the second housing part 12, the lower end face of the first housing part 11 can be provided with a concave limiting groove 300, which surrounds the periphery of the outlet of the first accommodating cavity 100 on the lower end face and communicates with the first accommodating cavity 100. The upper end of the second housing part 12 is engaged with the limiting groove 300 and connected to the lower end of the first housing part 11 through the fastener 40.

Further, the second housing part 12 can be in a T-shaped structure as a whole, and the second housing part 12 is fitted in the limiting groove 300 at the lateral part of the upper end, and the fastener 40 passes through and locks in the fastening hole provided in the limiting groove 300 from one side of the lateral part during installation. The vertical part of the second housing part 12 protrudes out of the limiting groove 300 and the first housing part 11.

The limiting groove 300 may further be a stepped groove with different inner diameters, such as a two-stage stepped groove shown in Figures 1 and 2. The upper end of the second housing part 12 is mainly fitted in the first-stage stepped groove with a smaller inner diameter, and the limiting groove 300 penetrates the lower end face of the first housing part 11 with a second-stage stepped groove with a larger inner diameter.

To ensure the sealing performance of the first housing part 11 and the second housing part 12 after connection, the pressure control valve of the present invention further includes a housing sealing ring 50, which is assembled between the bottom surface of the limiting groove 300 and the upper end face of the second housing part 12 to seal the mating surfaces of the first housing part 11 and the second housing part 12, to avoid the leakage of the medium due to the existence of gaps. To locate the housing sealing ring 50, at least one of the bottom surface of the limiting groove 300 and the upper end face of the second housing part 12 is provided with an annular groove to locate the housing sealing ring 50.

On the first housing part 11, the first accommodating cavity 100 may further include a first main cavity 101 and a first passage hole 102 which are communicated with each other. The first main cavity 101 is located at the upper end of the first housing part 11 and extends through the upper end face of the first housing part 11. The inner diameter of the first passage hole 102 is smaller than the inner diameter of the first main cavity 101, the first passage hole 102 is located at the lower end of the first housing part 11 and extends through the lower end face of the first housing part 11.

On the second housing part 12, the second accommodating cavity 200 further includes a second main cavity 201 and a second passage hole 202 which are communicated with each other. The second main cavity 201 is located at the upper end of the second housing part 12 and extends through the upper end face of the second housing part 12. The second main cavity 201 is also butted and communicated with the first passage hole 102. The inner diameter of the second passage hole 202 is smaller than the inner diameter of the second main cavity 201, the second passage hole 202 is located at the lower end of the second housing part 12 and extends through the lower end face of the second housing part 12.

The size of the housing 10, such as the outer diameter, also forms the outer diameter of the pressure control valve. In the present invention, the outer diameter of the housing 10 (the outer diameter of the pressure control valve) is 85 mm to 95 mm.

Referring to figures 1 and 2, the throttle valve 20 is disposed in the first accommodating cavity 100 of the first housing part 11. To realize the miniaturization of the throttle valve 20, and further contribute to the miniaturization of the entire pressure control valve, the outer diameter of the throttle valve 20 is 17 mm to 30 mm, for example, 18mm can be preferred.

The throttle valve 20 is mainly arranged in the first main cavity 101 of the first accommodating cavity 100. The transition surface between the first main cavity 101 and the first passage hole 102 is an annular plane, and the bottom surface of the throttle valve 20 can be abutted and supported on this annular plane. There is a certain gap between the outer periphery of the throttle valve 20 and the inner wall surface of the first main cavity 101 so that the throttle valve 20 can be replaced in and out. In this regard, the pressure control valve of the present invention further includes a retaining ring 60 and a first sealing ring 70. The retaining ring 60 is placed above the throttle valve 20 and engaged in the first accommodating cavity 100 to limit the throttle valve 20 in the first main cavity 101 and prevent the throttle valve 20 from automatically coming out. The first sealing ring 70 is arranged between the outer periphery of the throttle valve 20 and the inner wall of the first accommodating cavity 100 to seal the gap between the two. Corresponding to the retaining ring 60, the inner wall of the first main cavity 101 is provided with an annular groove to engage the retaining ring 60.

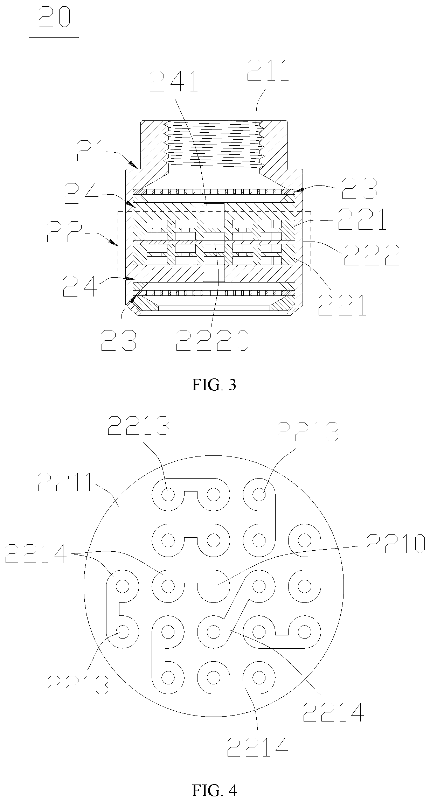

As shown in Figure 1 and Figure 3, the throttle valve 20 can structurally include a first valve housing 21 open at two opposite ends, a flow channel plate group 22 arranged in the first valve housing 21, and a filter plate 23 arranged in the first valve housing 21 and located at at least one side of the flow channel plate group 22. The filter plate 23 is used to filter impurities in the medium and prevent impurities from entering the sealing surface of the main pump. The aperture of the filter plate 23 is 0.5 mm to 0.8 mm and may be 0.6mm, for example. The flow channel plate group 22 is provided with a fluid passage through which the medium flows spirally so that the resistance of the medium is increased and the flow rate is better controlled.

The throttle valve 20 further includes two positioning plates 24 arranged in the first valve housing 21 at opposite intervals. The flow channel plate group 22 is arranged between two positioning plates 24 and fixed in the first valve housing 21 through the two positioning plates 24. Each positioning plate 24 is provided with a central hole 241. The central holes 241 of the two positioning plates 24 are opposite to each other and communicate with each other. At the same time, the central hole 241 is also in relative communication with the fluid passage of the flow channel plate group 22. The central hole 241 of one positioning plate 24 forms the inlet of the fluid passage, and the central hole 241 of the other positioning plate 24 forms the outlet of the fluid passage.

In the embodiment shown in Figure 1 and Figure 3, two opposite sides of the flow channel plate group 22 are respectively provided with filter plates 23, and the two filter plates 23 also correspond to the inside of the inlet and the inside of the outlet of the throttle valve 20.

The inner cavity of the first valve housing 21 may include two cavities connected up and down. The inner diameter of the first cavity is smaller than the inner diameter of the second cavity, the second cavity is used as the main cavity to accommodate the flow channel plate group 22 and the filter plate 23. The first cavity also serves as the inlet end of the throttle valve 20, and its inner surface is provided with threads 211, which can make the incoming medium form a spiral flow and then pass through the filter plate 23 and the flow channel plate group 22.

Further, as shown in Figures 3 to 6, the flow channel plate group 22 includes two flow channel plates 221 which are superposed, and an intermediate plate 222 stacked between the two flow channel plates 221, so that the two flow channel plates 221 are attached to two opposite sides of the intermediate plate 222. The flow channel plate 221 is provided with a central flow channel hole 2210, and the intermediate plate 222 is provided with a central through hole 2220. The central flow channel holes 2210 of the two flow channel plates 221 communicate with the center through hole 2220 of the intermediate plate 222, respectively. The medium entering the throttle valve 20 sequentially passes through the central flow channel hole 2210 of the upper flow channel plate 221 and the central through hole 2220 of the intermediate plate 222 to enter the lower flow channel plate 221, and finally passes through the lower flow channel plate 221 and is output from the throttle valve 20.

Each flow channel plate 221 includes a first surface 2211 and a second surface 2212 opposite to each other, and a plurality of through holes 2213 penetrating through the first surface 2211 and the second surface 2212.

The first surface 2211 is provided with a plurality of first grooves 2214 distributed at intervals, and the plurality of first grooves 2214 are isolated from each other. Each first groove 2214 surrounds and communicates with at least two through holes 2213, and the first groove 2214 forms a first flow channel with the through holes 2213 in surrounding communicated therewith. The first groove 2214 is integrally formed into a corresponding shape according to the number and the setting of the outer peripheral shape of through holes 2213 surrounded and communicated with the first groove 2214. For example, in the embodiment shown in Figure 4, the first groove 2214 surrounds and communicates with two through holes 2213, and the first groove 2214 is preferably arranged smoothly (e.g., circularly) around the outer peripheral part of the through holes 2213, so that the appearance of the first groove 2214 is (or similar to) 8-shaped or B-shaped. Of course, in other embodiments, the first groove 2214 can also be V-shaped, M-shaped, Z-shaped, S-shaped, etc.

Among all the first flow channels on the first surface 211, a first flow channel surrounds and communicates with the central flow channel hole 2210 and the adjacent at least one through hole 2213, so that the central flow channel hole 2210 is formed in a first flow channel. The medium entering the first surface 211 whirls along the first flow channel and the resistance increases, and finally enters the second surface 212 and the intermediate plate 222 through the central flow channel hole 2210.

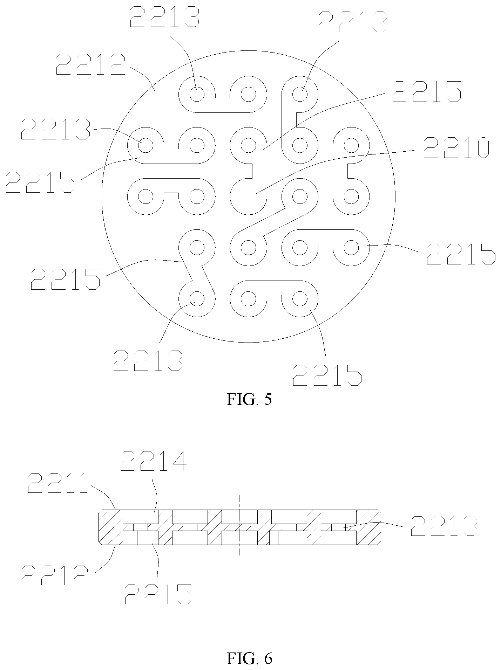

The second surface 2212 is provided with a plurality of second grooves 2215 distributed at intervals, and the plurality of second grooves 2215 are isolated from each other. Each second groove 2215 surrounds and communicates with at least two through holes 2213, and the second groove 2215 forms a second flow channel with the through holes 2213 in surrounding communicated therewith. The second groove 2215 is integrally formed into a corresponding shape according to the number and the setting of the outer peripheral shape of through holes 2213 surrounded and communicated with the second groove 2215. For example, in the embodiment shown in Figure 5, the second groove 2215 surrounds and communicates with the two through holes 2213, and the outer peripheral part of the second groove 2215 surrounding the through holes 2213 is preferably arranged smoothly (for example, in a circular shape), so that the appearance of the second groove 2215 is (or is similar to) 8-shaped or B-shape. Of course, in other embodiments, the second groove 2215 can also be V-shaped, M-shaped, Z-shaped, S-shaped, etc.

Among all the second flow channels on the second surface 2212, a second flow channel surrounds and communicates with the central flow channel hole 2210 and the adjacent at least one through hole 2213, so that the central flow channel hole 2210 is formed in a second flow channel. Part of the medium entering the second surface 2212 can continue to flow downwards directly through the butted central through hole 2220, and part of the medium will flow dispersedly along the second flow channel.

Referring to Figures 4 to 6, the first grooves 2214 on the first surface 2211 and the second grooves 2215 on the second surface 2212 are asymmetrically distributed. In the thickness direction of the flow channel plate 221, the first groove 2214 and the second groove 2215 are relatively staggered, which may be completely staggered or partially overlapped.

At least one first flow channel and at least one second flow channel communicate through the same through hole 2213. That is, one of the through holes 2213 surrounded and communicated with at least one first groove 2214 is the same as one of the through holes 2213 surrounded communicated with a second groove 2215.

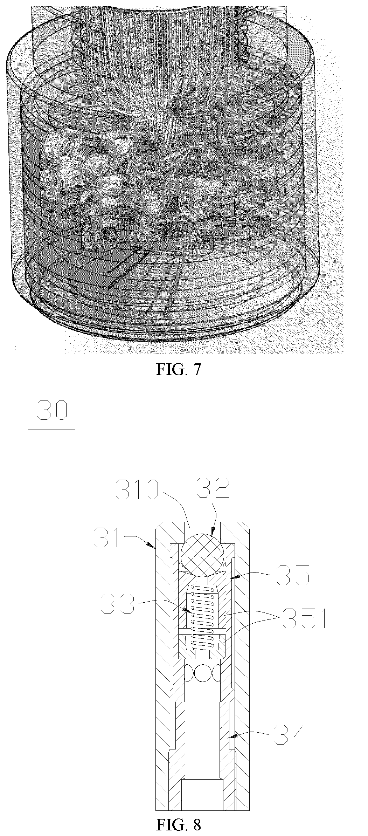

On the flow channel plate 221, the first flow channel and the second flow channel communicate through the central flow channel hole 2210 to form a channel of the flow channel plate 221, and the channels of the two flow channel plates 221 communicate with the central through hole 2220 of the intermediate plate 222 to form a fluid passage of the flow channel plate group 22. Figure 7 shows the streamlined diagram when the medium passes through the throttle valve. Combining with figures 3 to 7, when the medium enters the throttle valve 20 and passes through the flow channel plate group 22 when passing through the first flow channel plate 221, the medium enters and forms a spiral flow along the first groove 2214 on the first surface 2211 of the flow channel plate 221. Part of the medium will enter from the first groove 2214 communicating with the central through hole 2220 and pass through the central through hole 2220 to the second surface 2212, and spiral flow will also be formed in the second groove 2215 of the second surface 2212. Part of the medium will enter along the second groove 2215 and pass through the central flow channel hole 2210 and the central through hole 2220 of the intermediate plate 222, and when it reaches the second flow plate 221, similarly to the first flow channel plate 221, the medium also forms a spiral flow in the first groove 2214 and the second groove 2215 respectively, and finally the medium is output from the throttle valve 20 through the central hole 241 of the positioning plate 24 and the outlet of the first valve housing 21, so as to achieve the purpose of controlling the flow.

As shown in Figures 1 and 2, the check valve 30 is disposed in the second accommodating cavity 200 of the second housing part 12. To realize the miniaturization of the check valve 30, the outer diameter of the check valve 30 is 6.5 mm to 7.5 mm, and 7mm can be selected.

In the second accommodating cavity 200, the check valve 30 is mainly arranged in the second main cavity 201. The transition surface between the second main cavity 201 and the second passage hole 202 is an annular plane, and the bottom surface of the check valve 30 can be abutted and supported on the annular plane. There is a certain gap between the outer periphery of the check valve 30 and the inner wall surface of the second main cavity 201 so that the check valve 30 can be replaced in and out. In this regard, the pressure control valve of the present invention further includes a second sealing ring 80, which is arranged between the outer periphery of the check valve 30 and the inner wall of the second accommodating cavity 200 to seal the gap between the two.

As shown in Figures 1 and 8, the check valve 30 may further include a second valve housing 31 which is open at two opposite ends, a sealing ball 32 arranged in the second valve housing 31, a compression spring 33, and a compression nail 34. The sealing ball 32 is detachably sealed at a port (inlet end) 310 of the second valve housing 31 facing the throttle valve 20 in the second valve housing 31, and the diameter of the sealing ball 32 is smaller than the inner diameter of the port 310 so that the port 310 can be closed and will not escape out of the second valve housing 31 from the port 310. The compression spring 33 is arranged in the second valve housing 31 through a pressure seat 35 and telescopically supported below the sealing ball 32. The inner seat of the pressure seat 35 can be formed by two limit blocks 351 spaced up and down. When the compression spring 33 is in the telescopic state, the two limit blocks 351 are spread, and the sealing ball 32 is abutted in the port 310 of the second valve housing 31 and closes the port 310. When the sealing ball 32 is moved downward by the medium pressure, it compresses the compression spring 33, and the two limit blocks 351 are close to each other and also limit the compression of the compression spring 33. The compression nail 34 is arranged in the other opposite port of the second valve housing 31 and supported below the outer seat of the pressure seat 35.

In the check valve 30, the opening pressure of the check valve 30 is controlled by the pressing force of the compression spring 33. When the medium flows normally, the pressure of the medium pushes the sealing ball 32 away and opens the inlet of the check valve 30. Under this condition, the smaller the flow resistance of the check valve 30, the better. When the medium flows in the reverse direction, the check valve 30 remains sealed under the action of spring force and medium pressure, and the sealing ball 32 and the port 310 of the second valve housing 31 are in line seal, so that the sealing performance is good and the leakage of radioactive medium is prevented. The compression nail 34 can be threaded and engaged with the second valve housing 31 so that the compression force of the compression spring 33 can be adjusted according to the actual working conditions.

To make the check valve 30 open under a small medium pressure, the compression spring 33 is a small wire diameter spring, and the wire diameter of the small wire diameter spring is 0.1 mm to 0.2 mm.

The pressure control valve of the invention is suitable for the high-pressure large-diameter hydrostatic sealing equipment of the reactor coolant pump of a nuclear power plant and can realize forward flow control under the working condition of small pressure, such as 1.0bar, and reversely prevent medium leakage. In the high-pressure large-diameter hydrostatic sealing equipment, the pressure control valve controls the flow rate of the medium flowing into the No.3 seal in the injection pipeline through the throttle valve therein, and prevents the radioactive medium from flowing back to the injection pipeline due to the increase of the back pressure of the No.2 seal through the check valve.

The above is only the embodiment of the present invention, which does not limit the patent scope of the present invention. Any equivalent structure or equivalent process transformation made by using the contents of the specification and drawings of the present invention, or directly or indirectly applied to other related technical fields, are equally included in the patent protection scope of the present invention.

## Claims

1. A replaceable pressure control valve, comprising a housing, a throttle valve, and a check valve, the throttle valve and the check valve are both installed in the housing; the housing comprises a first housing part and a second housing part detachably connected to the lower end of the first housing part; the first housing part is internally provided with a first accommodating cavity penetrating through two opposite end faces of the first housing part, and the second housing part is internally provided with a second accommodating cavity penetrating through two opposite end faces of the second housing part, and the first accommodating cavity is communicated with the second accommodating cavity;
the throttle valve is limited in the first accommodating cavity and is in clearance fit with the inner wall surface of the first accommodating cavity, and the check valve is limited in the second accommodating cavity and is in clearance fit with the inner wall surface of the second accommodating cavity; the throttle valve comprises a first valve housing with two opposite ends open, a flow channel plate group arranged in the first valve housing, and a filter plate arranged in the first valve housing and located on at least one side of the flow channel plate group; the flow channel plate group is provided with a fluid passage through which the medium forms a spiral flow; the flow channel plate group comprises at least one flow channel plate, and the flow channel plate is provided with a central flow channel hole; each of the flow channels plate comprises a first surface and a second surface which are opposite to each other, and a plurality of through holes which penetrate through the first surface and the second surface; the first surface is provided with a plurality of first grooves distributed at intervals, and each first groove surrounds and communicates with at least two through holes to form a first flow channel; the second surface is provided with a plurality of second grooves distributed at intervals, and each second groove surrounds and communicates with at least two through holes to form a second flow channel; the central flow channel hole is formed in the first flow channel and the second flow channel in communication; at least one of the first flow channels and at least one of the second flow channels are communicated through the same through hole.

2. The replaceable pressure control valve according to claim 1, wherein the lower end face of the first housing part is provided with a limiting groove which is communicated with the first accommodating cavity;
the upper end of the second housing part is matched with the limiting groove and connected with the lower end of the first housing part through fasteners.

3. The replaceable pressure control valve according to claim 2, wherein the pressure control valve further comprises a housing sealing ring;
the housing sealing ring is assembled between the bottom surface of the limiting groove and the upper end face of the second housing part.

4. The replaceable pressure control valve according to claim 1, wherein the flow channel plate group comprises two superimposed flow channel plates and an intermediate plate stacked between the two flow channel plates; the flow channel plate is provided with a central flow channel hole, and the intermediate plate is provided with a central through hole which is relatively communicated with the central flow channel hole on the flow channel plate.

5. The replaceable pressure control valve according to claim 4, wherein the first groove on the first surface and the second groove on the second surface are asymmetrical.

6. The replaceable pressure control valve according to claim 4, wherein the first groove is 8-shaped, B-shape, or S-shape, and surrounds and communicates with two through holes on the first surface; the second groove is 8-shaped, B-shaped, or S-shaped, and the second surface is surrounded and communicated with the two through holes.

7. The replaceable pressure control valve according to claim 1, wherein the throttle valve further comprises two positioning plates arranged in the first valve housing at opposite intervals; the flow channel plate group is arranged between the two positioning plates; each positioning plate is provided with a central hole, and the central hole is relatively communicated with the fluid passage of the flow channel plate group.

8. The replaceable pressure control valve according to claim 1, wherein the check valve comprises a second valve housing with two opposite ends open, a sealing ball, a compression spring and a compression nail;
the sealing ball is arranged in the second valve housing and can be separated and sealed at a port of the second valve housing; the compression spring is arranged in the second valve housing through a pressure seat and is telescopically supported below the sealing ball; the compression nail is arranged in another port of the second valve housing and supported below the pressure seat.

9. The replaceable pressure control valve according to claim 8, wherein the compression spring is a small wire diameter spring; the wire diameter of the small wire diameter spring is 0.1 mm to 0.2 mm.

10. The replaceable pressure control valve according to any one of claims 1-9, wherein the first accommodating cavity comprises a first main cavity and a first passage hole which are communicated with each other;
the first main cavity is located at the upper end of the first housing part and extends through the upper end face of the first housing part, and the throttle valve is arranged in the first main cavity; the inner diameter of the first passage hole is smaller than the inner diameter of the first main cavity, the first passage hole is located at the lower end of the first housing part and extends through the lower end face of the first housing part.

11. The replaceable pressure control valve according to any one of claims 1-9, wherein the second accommodating cavity comprises a second main cavity and a second passage hole which are communicated with each other;
the second main cavity is located at the upper end of the second housing part and extends through the upper end face of the second housing part, and the check valve is arranged in the second main cavity; the inner diameter of the second passage hole is smaller than the inner diameter of the second main cavity, the second passage hole is located at the lower end of the second housing part and extends through the lower end face of the second housing part.

12. The replaceable pressure control valve according to any one of claims 1-9, wherein the outer diameter of the throttle valve is 17 mm to 30 mm;
the aperture of the filter plate is 0.5 mm to 0.8 mm;
the outer diameter of the check valve is 6.5 mm to 7.5 mm;
the outer diameter of the pressure control valve is 85 mm to 95 mm.

13. The replaceable pressure control valve according to any one of claims 1-9, wherein the pressure control valve further comprises a retaining ring, a first sealing ring and a second sealing ring;
the retaining ring is arranged above the throttle valve and clamped in the first accommodating cavity; the first sealing ring is arrange between the outer periphery of the throttle valve and the inner wall of the first accommodating cavity;
the second sealing ring is arrange between the outer periphery of the check valve and the inner wall of the second accommodating cavity.
